# EUROPÄISCHE PATENTANMELDUNG

(11) **EP 1 267 476 A2**
(43) Veröffentlichungstag der Anmeldung: **18.12.2002**
(21) Anmeldenummer: 02100692.9
(22) Anmeldetag: 11.06.2002
(51) Int. Cl.: H02M 3/335, H02M 3/155

(54) **Spannungswandler**

(30) Priorität: 13.06.2001 DE 10128687
(71) Anmelder: Philips Corporate Intellectual Property GmbH, 20099 Hamburg (DE); Koninklijke Philips Electronics N.V., 5621 BA Eindhoven (NL)
(72) Erfinder: Tolle, Tobias, c/o Philips Corporate Int Prop GmbH, 52066, Aachen (DE); Dürbaum, Thomas, c/o Philips Corp Int Propert GmbH, 52066, Aachen (DE)
(74) Vertreter: Volmer, Georg, Dipl.-Ing.

(57) **Zusammenfassung**

Bei einem Spannungswandler mit einer Halbbrücke aus gesteuerten Halbleiterschaltern, einem Transformator und einer Gleichrichterschaltung, wobei eine Primärwicklung des Transformators in Reihe mit mindestens einem Kondensator an die Halbbrücke angeschlossen ist, ist der mindestens eine Kondensator derart bemessen, dass die Resonanzfrequenz der Reihenschaltung aus dem mindestens einen Kondensator und einer bei leitender Gleichrichterschaltung wirksamen Induktivität größer als die Hälfte der Frequenz von Impulsen ist, mit denen die Halbleiterschalter gesteuert werden. Ähnliche Maßnahmen sind auch bei einem Spannungswandler mit direkter Kopplung durchführbar, wobei anstelle des Transformators eine Längs- und eine Querspule treten.

## Beschreibung

Die Erfindung betrifft einen Spannungswandler mit einer Halbbrücke aus gesteuerten Halbleiterschaltern, einem Transformator und einer Gleichrichterschaltung, wobei eine Primärwicklung des Transformators in Reihe mit mindestens einem Kondensator an die Halbbrücke angeschlossen ist.

Spannungswandler der gattungsbildenden Art sind für verschiedene Zwecke und in verschiedenen Ausführungen bekannt geworden. Durch Vorschalten eines Gleichrichters können sie als Netzgerät für elektronische Geräte verwendet weiden. Neben der Erzeugung einer oder mehrerer Gleichspannungen dienen sie auch der galvanischen Trennung zwischen dem Stromnetz und den versorgten Schaltungen.

Derartige Schaltungen sind unter anderem in US 5,808,879 und US 5,402,329 beschrieben und weisen Merkmale auf wie Schalten im Nulldurchgang, Regelung durch Pulsbreitenmodulation, feste Arbeitsfrequenz, optimales Rücksetzen des Transformatorkerns, Ausnutzung der Streuinduktivität des Transformators, reduzierte Spannungsbelastung der Halbleiterschaltung und niedrige elektromagnetische Störstrahlung. Diese Schaltungen arbeiten mit einer weitgehend konstanten Spannung über dem Kondensator innerhalb jeweils einer Halbwelle, so dass der Kondensator lediglich als Koppelkondensator zur Vermeidung eines Gleichstroms in der Primärwicklung des Transformators dient. Dies wird insbesondere in US 5,808,879, Spalte 6, Zeile 42 beschrieben. Daraus ergibt sich ein linearer Stromverlauf (siehe US 5,808,879, Fig. 5 und US 5,402,329, Figuren 6b bis 6f).

Aufgabe der vorliegenden Erfindung ist es, einen Spannungswandler anzugeben mit gegenüber den bekannten Spannungswandlern erhöhtem Wirkungsgrad und verminderten Kosten.

Diese Aufgabe wird erfindungsgemäß dadurch gelöst, dass der mindestens eine Kondensator derart bemessen ist, dass die Resonanzfrequenz der Reihenschaltung aus dem mindestens einen Kondensator und einer bei leitender Gleichrichterschaltung wirksamen Induktivität größer als die Hälfte der Frequenz von Impulsen ist, mit denen die Halbleiterschalter gesteuert werden. Dabei kann die wirksame Induktivität von den Streu-Induktivitäten des Transformators gebildet werden. Falls diese den Anforderungen im einzelnen nicht genügen sollten, kann gemäß einer Weiterbildung auch vorgesehen sein, dass mit dem Transformator und dem mindestens einen Kondensator eine Spule in Reihe geschaltet ist. Diese Spule kann sich auf der Primär- oder auf der Sekundärseite befinden.

Bei der Erfindung wirkt der Kondensator nicht nur zur Abtrennung der Gleichspannung, sondern beeinflusst den Stromverlauf durch die Primärwicklung des Transformators derart, dass die Spitzenströme reduziert werden, so dass bei gleicher Ausgangsleistung preiswertere Bauelemente verwendet werden können oder bei Beibehaltung der Bauelemente eine höhere Ausgangsleistung erzielt werden kann. Die höhere Ausgangsleistung wird durch den steileren Stromanstieg zu Beginn der Halbperiode erzielt.

Diese Eigenschaften gestatten die Verwendung eines Transformators mit niedrigeren Spezifikationsanforderungen, beispielsweise mit einer höheren Streuinduktivität.

Eine vorteilhafte Ausgestaltung des erfindungsgemäßen Spannungswandlers besteht darin, dass eine Reihenschaltung aus der Primärwicklung und dem mindestens einen Kondensator zwischen den Abgriff und einen der Endpunkte der Halbbrücke geschaltet ist. Dabei kann der Kondensator am Abgriff- also am Verbindungspunkt zwischen den Halbleiterschaltern - und die Primärwicklung am Endpunkt angeschlossen sein und umgekehrt.

Eine andere vorteilhafte Ausgestaltung besteht darin, dass zwei Kondensatoren einen weiteren Brückenzweig bilden und dass die Primärwicklung zwischen die Abgriffe der Halbbrücke und des weiteren Brückenzweiges geschaltet ist.

Die Erfindung betrifft ferner einen Spannungswandler mit einer Halbbrücke aus gesteuerten Halbleiterschaltern, wobei eine Längsspule und eine Querspule in Reihe mit mindestens einem Kondensator an die Halbbrücke angeschlossen sind und parallel zur Querspule eine Gleichrichterschaltung angeordnet ist. Ein derartiger Spannungswandler ist beispielsweise beschrieben in Poon N.K. und Pong M.H.: "A Novel ZVS Direct Coupling Converter (DCC)" in IEEE PESC, 1996, Seiten 94 bis 97.

Bei einem Spannungswandler dieser Art wird die erfindungsgemäße Aufgabe dadurch gelöst, dass der mindestens eine Kondensator derart bemessen ist, dass die Resonanzfrequenz der Reihenschaltung aus dem mindestens einen Kondensator und der Längsspule größer als die Hälfte der Frequenz von Impulsen ist, mit denen die Halbleiterschalter gesteuert werden.

Ausführungsbeispiele der Erfindung sind in der Zeichnung anhand mehrerer Figuren dargestellt und in der nachfolgenden Beschreibung näher erläutert. Es zeigt:
- Fig. 1 bis Fig. 4: verschiedene Ausführungsbeispiele der ersten Ausgestaltung,
- Fig 5 und Fig 6: Ausführungsbeispiele der zweiten Ausgestaltung
- Fig. 7: einen erfindungsgemäß ausgestalteten direkt gekoppelten Spannungswandler,
- Fig. 8: Spannungs- und Stromverläufe bei einem bekannten Spannungswandler,
- Fig. 9: Spannungs- und Stromverläufe bei einem erfindungsgemäßen Spannungswandler und
- Fig. 10: Spannungs- und Stromverläufe bei einem erfindungsgemäßen Spannungswandler mit einem Transformator, der eine höhere Streuinduktivität aufweist und trotzdem die gleiche Leistung übertragen kann.

Gleiche Teile sind in den Figuren mit gleichen Bezugszeichen versehen.

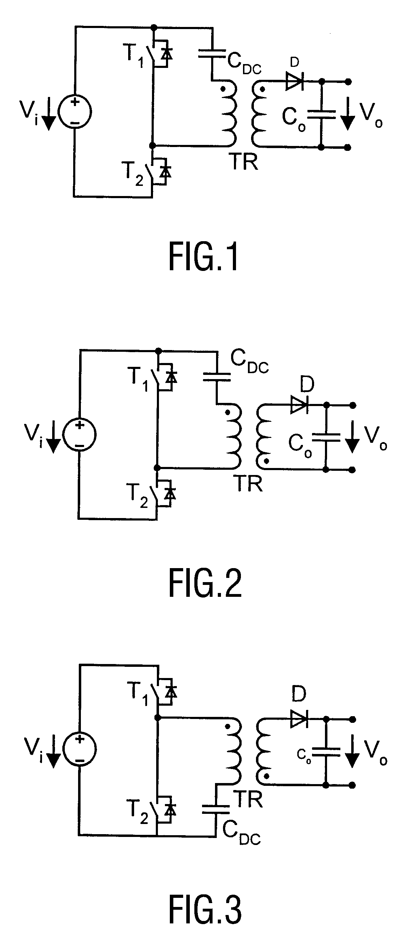

Die in den Figuren 1 bis 4 dargestellten Spannungswandler bestehen aus einer Halbbrücke aus jeweils zwei gesteuerten Halbleiterschaltern T₁, T₂ mit jeweils einer Freilaufdiode, einem Transformator TR, einem Kondensator C_{DC} und einer an die Sekundärwicklung des Transformators TR angeschlossenen Gleichrichteranordnung aus einer Diode D und einem Kondensator C₀. Es können im Rahmen der Erfindung auch andere Gleichrichterschaltungen verwendet werden, beispielsweise Zweiweggleichrichter. Anstelle des in den Figuren dargestellten einfachen Kondensators können auch beliebige Filterschaltungen vorgesehen sein.

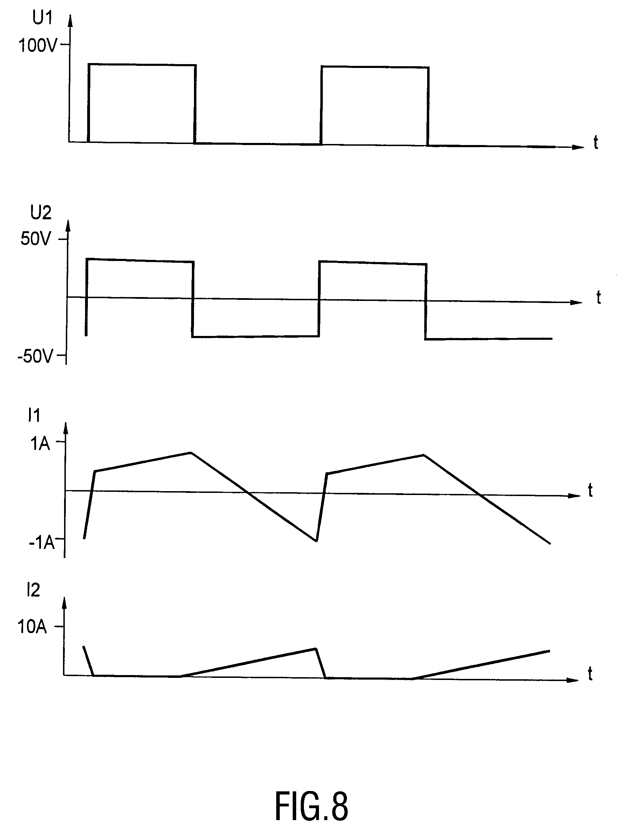

Eine aus einer Spannungsquelle zugeführte Gleichspannung Vᵢ wird in eine Gleichspannung Vₒ umgewandelt. Die gesteuerten Halbleiterschalter T₁ und T₂ werden gegenphasig mit Impulsen konstanter Frequenz, jedoch veränderlicher Impulsbreite angesteuert, die durch eine nicht dargestellte Regelschaltung vorgegeben wird. Die in den Figuren 1 bis 4 dargestellten Spannungswandler unterscheiden sich dadurch, an welchem Endpunkt der Halbbrücke die Reihenschaltung von Kondensator C_{DC} und Primärwicklung angeschlossen ist, sowie durch die Polung der Sekundärwicklung Die grundsätzliche Wirkungsweise ist jedoch gleich und wird später anhand der Figuren 8 bis 10 erläutert. Die Reihenfolge von Kondensator und Primärwicklung kann auch vertauscht werden.

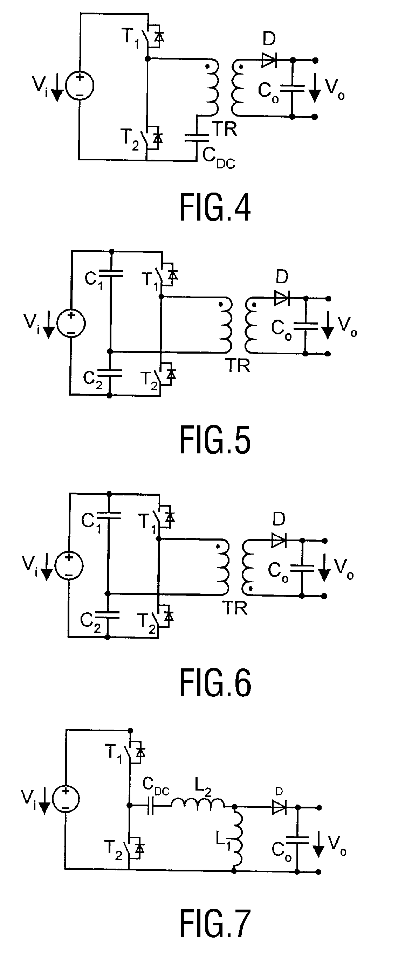

Die zweite Ausgestaltung des erfindungsgemäßen Spannungswandlers gemäß den Figuren 5 und 6 weist einen weiteren (passiven) Brückenzweig aus der Reihenschaltung der Kondensatoren C₁ und C₂ auf, dessen Abgriff mit einem Ende der Primärwicklung des Transformators TR verbunden ist, während das andere Ende an den Abgriff des Brückenzweiges aus T₁ und T₂ angeschlossen ist. Die Ausführungsbeispiele gemäß Fig. 5 und Fig 6 unterscheiden sich wiederum durch entgegengesetzte Polung der Sekundärwicklung

Fig 7 zeigt einen erfindungsgemäß ausgestalteten direkt gekoppelten Spannungswandler mit einer Querspule L₁ und einer Längsspule L₂. Die übrigen Teile entsprechen denjenigen nach den Figuren 1 bis 4. Dieser Spannungswandler weist zwar keine galvanische Trennung und auch kein durch das Übersetzungsverhältnis des Transformators auslegbares Wandlerverhältnis auf, kann jedoch in vielen Fällen vorteilhaft eingesetzt werden.

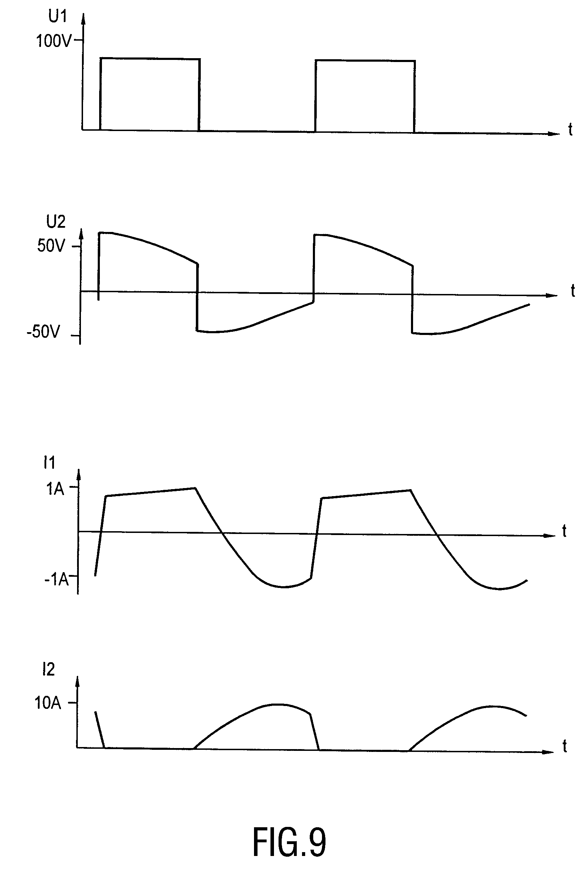

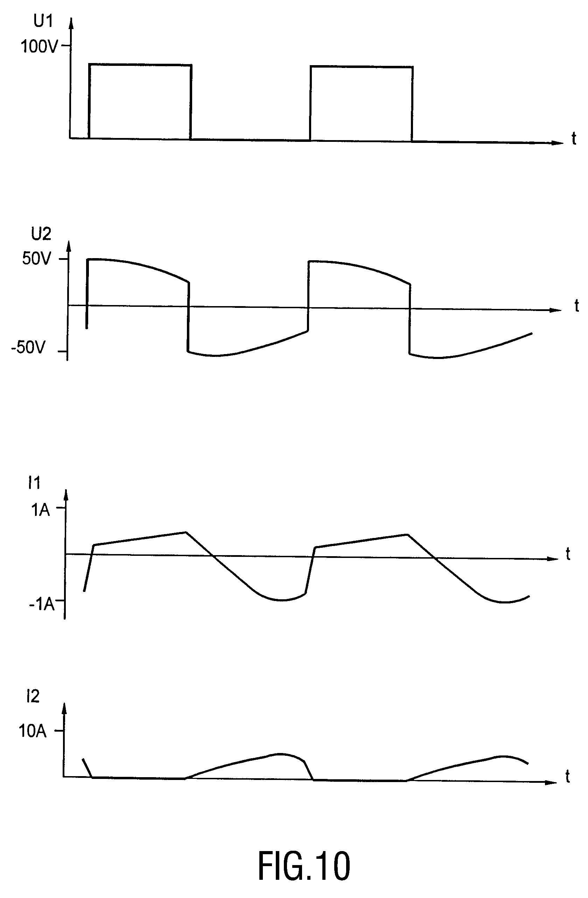

Die Figuren 8 bis 10 zeigen jeweils die zeitlichen Verläufe der Spannung U1 am Abgriff des Brückenzweiges, die Spannung U2 an der Primärwicklung, den Strom I1 durch die Primärwicklung und den Strom I2 durch die Sekundärwicklung und durch die Diode D bei einem Spannungswandler nach Fig 3.
Bei der bekannten Schaltung, deren Spannungs- und Stromverläufe in Fig 8 dargestellt sind, und bei den beiden erfindungsgemäßen Spannungswandlern (Fig. 9 und Fig 10) ist U1 rechteckförmig mit einer Amplitude von in diesem Beispiel etwa 80V. Bei der bekannten Schaltung (Fig 8) ist auch die Spannung U2 an der Primärwicklung im wesentlichen rechteckförmig, jedoch ohne einen Gleichspannungsanteil.

Die Darstellung von U2 in Fig 8 zeigt geringe Dachschrägen, die dadurch bedingt sind, dass der Kondensator C_{DC} nicht unendlich groß ist. Diese haben jedoch keinen bemerkenswerten Einfluss auf die Funktion der bekannten Schaltung.

Der Strom I1 bei dem bekannten Spannungswandler (Fig 8) steigt nach jeweils einer positiven Flanke der Spannung U2 schnell und dann langsam an. Der verhältnismäßige langsame Anstieg ist dadurch bedingt, dass der Transformator während dieses Zeitabschnitts durch die Sperrwirkung der Diode D im Leerlauf betrieben wird, so dass eine Reihenschaltung aus der Streuinduktivität und der Hauptinduktivität der Sekundärwicklung wirksam ist. Während dieser Zeit ist der Strom I2 = 0.

Die negative Flanke von U2 bewirkt eine Umkehr der Sekundärspannung, so dass die Diode D leitend wird Damit ist lediglich die Streuinduktivität der Primärwicklung für den folgenden Stromverlauf wirksam, so dass eine relativ schnelle lineare Stromänderung bis zur nächsten positiven Flanke von U2 folgt. Entsprechend steigt I2 linear an. Es wird aus den Diagrammen deutlich, dass hohe Spitzenströme erforderlich sind, um eine vorgegebene Ausgangsleistung zu erzielen.

Bei den erfindungsgemäßen Spannungswandlern, deren Spannungs- und Stromverläufe in den Figuren 9 und 10 dargestellt sind, fällt während der einzelnen Halbwellen die Spannung U2 merklich ab. Der von Spitze zu Spitze gemessene Wert der Spannung U2 wird dabei größer, da die Flanken gleich bleiben, jedoch von geringeren Spannungswerten ausgehen. Durch diese geänderte Kurvenform der Spannung U2 wird der Verlauf von I1 und I2 während der positiven Halbwellen der Spannung U2 nicht besonders stark beeinflusst, der Verlauf während der negativen Halbwelle weist jedoch eine erhebliche Krümmung auf. Der Maximalwert wird nicht erst bei der folgenden positiven Flanke, sondern wesentlich früher erreicht, so dass die Fläche der Kurve I2, das heißt die Ladungsmenge, je Periode der Schwingung welche in den Kondensator C0 gelangt, wesentlich größer wird.

Während den Spannungs- und Stromverläufen gemäß Fig. 9 ein Wert von C_{DC} =100 nF und eine Streuinduktivität von 35 µH zugrundeliegen, gehen die in Fig 10 dargestellten Spannungsverläufe von CDC = 63 nF und einer wesentlich höheren Streuinduktivität von 76 µH aus.

Während Fig 9 den Vorteil der höheren übertragbaren Leistung bei gleichem Transformator zeigt, wird durch Fig. 10 deutlich, dass der erfindungsgemäße Spannungswandler bei schlechterem Transformator und geringeren Spitzenströmen die gleiche Leistung wie ein bekannter Spannungswandler überträgt.

## Patentansprüche

1. Spannungswandler mit einer Halbbrücke aus gesteuerten Halbleiterschaltern, einem Transformator und einer Gleichrichterschaltung, wobei eine Primärwicklung des Transformators in Reihe mit mindestens einem Kondensator an die Halbbrücke angeschlossen ist,
**dadurch gekennzeichnet,**
**dass** der mindestens eine Kondensator (C_{DC}; C₁, C₂) derart bemessen ist, dass die Resonanzfrequenz der Reihenschaltung aus dem mindestens einen Kondensator (C_{DC}; C₁, C₂) und einer bei leitender Gleichrichterschaltung wirksamen Induktivität größer als die Hälfte der Frequenz von Impulsen ist, mit denen die Halbleiterschalter (T₁, T₂) gesteuert werden.

2. Spannungswandler nach Anspruch 1,
**dadurch gekennzeichnet,**
**dass** mit dem Transformator (TR) und dem mindestens einen Kondensator (C_{DC}; C₁, C₂) eine Spule in Reihe geschaltet ist.

3. Spannungswandler nach einem der Ansprüche 1 oder 2,
**dadurch gekennzeichnet,**
**dass** eine Reihenschaltung aus der Primärwicklung und dem mindestens einen Kondensator (C_{DC}) zwischen den Abgriff und einen der Endpunkte der Halbbrücke (T₁, T₂) geschaltet ist.

4. Spannungswandler nach einem der Ansprüche 1 oder 2,
**dadurch gekennzeichnet,**
**dass** zwei Kondensatoren (C₁, C₂) einen weiteren Brückenzweig bilden und dass die Primärwicklung zwischen die Abgriffe der Halbbrüche (T₁, T₂) und des weiteren Brückenzweiges (C₁, C₂) geschaltet ist.

5. Spannungswandler mit einer Halbbrücke aus gesteuerten Halbleiterschaltern, wobei eine Längsspule und eine Querspule in Reihe mit mindestens einem Kondensator an die Halbbrücke angeschlossen sind und parallel zur Querspule eine Gleichrichterschaltung angeordnet ist,
**dadurch gekennzeichnet,**
**dass** der mindestens eine Kondensator derart bemessen ist, dass die Resonanzfrequenz der Reihenschaltung aus dem mindestens einen Kondensator und der Längsspule größer als die Hälfte der Frequenz von Impulsen ist, mit denen die Halbleiterschalter gesteuert werden.
